(19) **Europäisches Patentamt**
**European Patent Office**
**Office européen des brevets**

(11) **EP 2 027 944 B1**

(12) **EUROPEAN PATENT SPECIFICATION**

(45) Date of publication and mention
of the grant of the patent:
**21.04.2010 Bulletin 2010/16**

(51) Int Cl.:
**B09B 3/00** *(2006.01)*    **B09C 1/08** *(2006.01)*

(21) Application number: **08159214.9**

(22) Date of filing: **27.06.2008**

(54) **Method for environmental stabilization of graves**

Verfahren zur Umgebungsstabilisierung von Gräbern

Procédé de stabilisation environnementale de tombes

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.06.2007 NO 20073344**

(43) Date of publication of application:
**25.02.2009 Bulletin 2009/09**

(73) Proprietor: **Protempra AS**
**Kongensgt. 16**
**0153 Oslo (NO)**

(72) Inventor: **Østbye, Kjell Larsen**
**2406 Elverum (NO)**

(74) Representative: **Balle, Morten et al**
**Protector IP Consultants AS**
**Oscarsgate 20**
**0352 Oslo (NO)**

(56) References cited:
**EP-A- 1 457 188**      **DE-A1- 10 116 113**
**DE-A1- 10 355 067**

**Description**

**Field of invention**

The present invention relates to environmental stabilization of graves, where the natural decomposition and composting has not taken place or takes extremely long time. More specifically the invention relates to a method for acceleration of the decomposition of buried bodies.

**Background**

During the time period from the mid 1950's to the end of the 1970's the deceased were wrapped up in plastic to avoid smell and leakage from the coffin. The plastic wrapping prevented smell and leakage but it was later discovered when the first graves were opened after the preservation period, that the plastic wrapping also prevented the natural decomposition and composting of the buried body. Examinations have revealed that even after 40 years or more, a grave were the body is wrapped in plastic, is almost not decomposed at all.

Additionally, the buried body may be preserved by natural causes. In compact soil being rich in clay, the grave may be conserved for a long and undeterminable time. The natural conditions for decomposition and composting are not present in such graves due to the humidity and lack of oxygen. Additionally, the fat tissue in the skin forms adipocere that is resistant to decomposition and forms a hard and protective outer layer around the body.

After the preservation period, or prolonged preservation period, for a grave, it is common to re-use the grave. The grave is then opened and the remains therein are deposited as prescribed. The grave may also be opened if the spouse or other close family wishes to be buried in the same grave. To open a grave that is not decomposed as assumed, is a disagreeable task and is not in accordance with the health and safety at work act. The opening of such a grave may give a smell that causes discomfort in the neighborhood. Accordingly, such graves are preserved and made unavailable for new burials, despite a wish to be buried in the same grave, or the need to release the area for new graves or other use.

NO 300006, by the present inventor, describes a method for post decomposition of a body buried in soil. Chemicals to decompose the buried body are injected by means of an injection device. The chemicals are preferably burnt lime, or quicklime, i.e. CaO. According to the method described there, a bore for injection of quicklime is made after localization of the coffin. Optionally, an additional pressure release bore to release the pressure caused by the injection, is made before injection. It is also mentioned that steam may be injected into the grave to increase the temperature above the normal core temperature in a grave (in Norway) of about 2-4 °C , to start the reaction between the water in the grave and the injected quicklime. During the reaction between quicklime and water, the temperature in the grave may raise to above 100 °C. The soft tissue will then be dissolved and be made available for natural decomposition. A similar method is known from DE 10355067-A1.

The main problem with this known method is the process is hard to control. Accordingly it is difficult to ensure that the desired reaction takes place through the total volume of the coffin. Additionally, the method is totally dependent on the water content of the grave. Variation in water content may give undesired variations in the results of the injection. Additionally, adipocerous graves are difficult or impossible to treat using this method as the adiposere prevents contact between the quicklime and water.

EP 1 457 188 relates to a method to facilitate the decomposition of adipocerous graves, in which method CaO is injected through a bore into the grave, and where the CaO is mechanically mixed with the content in the grave by means of a drill bit with knives. The method according to EP 1 457 188 has, however, met resistance and is not accepted by the authorities responsible for the graveyards, at least in Norway, as the mechanical cutting and mixing has been regarded as being unethical.

Accordingly, there is still a need for a method that ensures a post decomposition for environmental stabilization of graves in a safe, controllable and ethically worthy way.

**Short description of the invention**

According to the present invention the above identified need is solved by a method for environmental stabilization of graves where the natural degradation has not occurred, the method comprising the following steps:

- drilling a plurality of bore holes into the grave,
- injection of CaO into the grave through a plurality of bore holes, and
- allowing the reaction between CaO and water to develop heat,

wherein CaO mixed with air and pressurized water, are injected simultaneously. Introduction of quicklime mixed with air at the same time as water is injected, ensures an intimate mixing between water and quicklime to ensure that water and quicklime are allowed to react to create heat. By injecting the water under pressure, the water and quicklime will be mixed with the surrounding soft organic material to accelerate the degradation thereof. Injection of air together with the quicklime will have a function in mixing water and quicklime efficiently, and to be a first oxygen source for the further degradation in the grave after the treatment.

The method may further comprise the step of measuring the humidity in the grave before injection and adjust the amount of injected water and/or CaO based on the humidity measurements. The measurement of humidity combined with adjustment of injection volume of water and/or quicklime assures that the process is optimized by adjusting the injection so that the humidity already in the grave and the injected water is at least an stoichiometric amount relative to the injected quicklime to allow for a full conversion of CaO to $Ca(OH)_2$ and the corresponding development of heat. An additional amount of quicklime may be necessary if the humidity of the grave is too high.

The water is, according to an embodiment, injected at a pressure between 3 kg/cm$^2$ and 500 kg/cm$^2$, such as e.g. from about 100 to 300 kg/cm$^2$. As mentioned above, injection at a high water pressure will result in mixing the injected water and quicklime intimately with each other and with soft parts of the organic material in the grave. A high pressure will allow mixing in a larger volume than a lower pressure. A pressure of 100 is often necessary to give a good mixing, whereas a pressure above 300 kg/cm$^2$ may give a higher degree of cutting than normally required.

According to one embodiment the water is heated before injection. The water may be heated to a temperature between 50 and 100 °C, such as e.g. between 65 and 90 °C, such as between 75 and 85 °C before injection. Heating of the water will add additional heat to the grave and will accelerate the startup of the reaction. The heating is of special importance if the temperature of the grave is low, e.g. about 4 °C, than if the temperature is higher.

According to one embodiment, the temperature development in the grave is registered after injection to confirm heat development. Confirmation of the heat development is a confirmation on the degradation process being started as requested.

According to an embodiment, the grave is allowed to stabilize for a period of some days to some months after the injection before the grave is opened. Allowing the grave to stabilize will allow after degradation and allow the grave to return into a natural state of degradation and composition.

**Short description of the figures**

Fig. 1 is a section through a grave during the present treatment,
Fig. 2 is a section of fig. 1,
Fig. 3 is a section of a detail during the injection phase, illustrating injection of water,
Fig. 4 is a section of a detail during the injection phase, illustrating injection of quicklime,
Fig. 5 is an alternative section of a detail during the present treatment, illustrating injection of quicklime,
Fig. 6 is a schematic bird's eyes view of a device for the present treatment, and

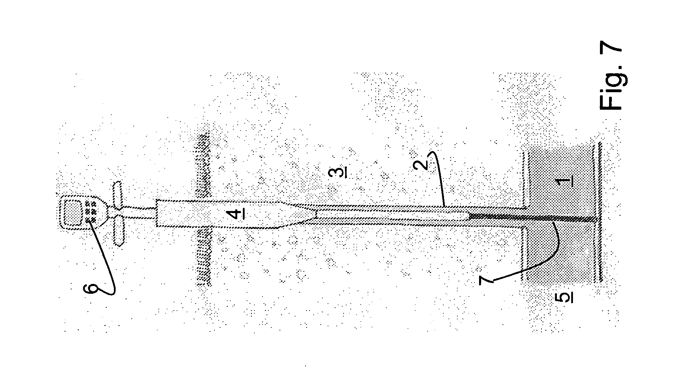

Fig. 7 is a section grave and a bore during measurements.

**Detailed description of the present invention**

Before a grave or a group of graves is / are to be treated the area has to be mapped and the grave(s) in question has (have) to be accurately localized and marked out. The existing maps are often inadequate to inaccurate for a sufficiently accurate localization. Examples of devices that may be used for exact mapping to mapping of a graveyard for this purpose, includes georadar, sonar, ultrasound, heat absorption measurements, etc. Georadar, or ground penetrating radar, is presently most preferred, but any method and device that is suitable for localizing bodies below the surface may be used, and the choice of equipment is not important for the present invention as long as it allows the grave to be localized with the required accuracy. Another method for establishing the localization of a coffin is to drill a bore into an assumed localization of a coffin, and to make manual measurements after boring through the top of the coffin. This method is, however, time consuming.

At well mapped graveyards, the graves may be localized merely by measurements. It will, however, normally be useful or even necessary, to make some control measurements of the kind mentioned above.

After localization of a grave, the grave is marked at the ground by marks identifying the centre of the coffin and the length axis of the grave. Additionally, the positions for the planned bores are marked at the ground. The planned bores may be arranged at a line along the length axis of the grave, or at a pattern that more efficiently covers the total area of the grave.

After localization and marking of the grave and the coffin 1, are made, a first bore hole 2 is made through the soil 3 covering the coffin by means of a drill. Preferably, the first bore hole is made to hit approximately in the centre of the coffin 1, both with respect to length and with, to hit the abdomen area of the buried body.

The condition of the coffin may thereafter be examined by visual inspection, e.g. by introduction of a fiber optical cable connected to a camera to make recordings of photos. Additional equipment for analyzing the content of gases, such as $CO_2$, $CH_3$, $H_2S$ and $NH_3$ that are indicators for the decomposition situation in the grave, may also be inserted through the bore. The ratio of $CO_2$ concentration over the cover of the coffin, and inside the coffin, is an indicator for the level of composition. A ratio of lower than 0.75, indicates that the grave is not fully composted and that the grave is not ready to be reused, even if the preservation period is over.

If the inspection concludes that the decomposition is finalized, the bore may be plugged, and the next grave may be inspected.

If the inspection concludes that the grave in question is not fully decomposed, the grave is prepared for treatment. Before the treatment, the distance from the surface to the top of the coffin and the distance from the top of the coffin to the bottom of the coffin, is measured and logged. Additionally, the humidity of the grave is measured preferably through the finalized bore hole, by means of a moisture meter, such as a laser moisture metering device, of by means of a dipstick. A laser measurement device is easy in use but is only giving the surface humidity of the buried body. Alternatively, a dipstick including a humidity measurement device that is connected to a measurement instrument may be used. The dipstick has the advantage of being able to measure both the surface humidity and the humidity at different levels of the grave.

An alternative method that may be used to give an indication of the humidity in a grave is to introduce a tube into one bore hole and blow some air into the tube. If the grave is wet, a bubbling sound dry may be heard, whereas a dry grave will not make any specific sound.

After the initial measurements, a plug 4 is set into the first bore hole 2. A number of bore holes 2a, b, c, ... are thereafter bored according to the marking made during the initial measurements. It has been found suitable to bore a total of eight bore holes 2, a, b, c, d, e, f, g in a grave for a body of an adult. The bore holes may be arranged at a straight line along the length axis of the grave, giving a distance between the bore holes of about 20 cm.

Alternatively, the bore holes may be arranged in an alternative pattern, where the individual bore holes may be arranged along the length axis of the grave, or at a distance therefrom. The number of bore holes, and the mutual arrangement of the bore holes, is a compromise between cost and efficiency. It may be advisable to have less distance between the boreholes close to the centre and head end of the coffin, where the concentration of organic material normally is highest. The most important is, however, that the distance between the bore holes facilitates substantially homogenous distribution of quicklime in the organic material. Accordingly, depending on the circumstances, fewer bore holes, or more bore holes may be required in a specific situation.

To avoid unwanted smell, and to prevent a "blowouts" of some of the contents of the grave due to high pressure during the further treatment, plugs 4 are put into the bore holes before the injection in the other bore holes is started, such as immediately after pulling up the drill. The plugs 4 are spear formed members onto which an expandable rubber member is vulcanized onto lower part thereof. After the plug is inserted the rubber part is expanded towards the walls of the bore hole by means of pressurized air.

After finishing the drilling, the plug 4 is removed from one of the holes closest to the centre of the coffin, such as the first bore hole 2, and replaced by an injection probe 5. The injection probe may be identical with the drill, such as the drill used bro making the bore holes, and will then have a drill bit 23 at its lower end. Preferably, the injection probe 5 is a combined injection probe for water and quicklime, having coaxial channels for water and quicklime and separate injection nozzles 8, 9 for water and quicklime. Alternatively, a two injection probes, one for water and one for quicklime, may be used in any order.

When using a combined injection probe, water and quicklime may be injected simultaneously or separately in any order. When introducing the components separately, the quicklime is normally injected before the water, so that the water helps in distributing the quicklime in the grave. It is, however, preferred under normal circumstances, to introduce quicklime and water simultaneously, to promote the distribution of the quicklime in the grave. The combination of injecting water and quicklime together results in an intimate mixing of water, quicklime and air that is used as a blowing agent for the quicklime. By using pressurized water, this mixture is effectively mixed with the organic material in the grave, to effectively promote the required degradation therein.

Quicklime and water will after mixing react in an exothermal reaction. To promote the heating of the contents of the grave, hot water may be used to promote the required reaction. The use of hot water may be important to accelerate the reaction, especially for the first injection both as the temperature in the grave then is low and that the first injection normally is into the abdomen area, having the highest content of organic material. The water may be heated to about 60 °C to about 100 °C, such as from 70 °C to 90 °C, such as e.g. about 80 °C.

The exothermal reaction from the first injection will result in heating of the contents of the grave making it less important to use hot water for the succeeding injections in the same grave Following the first injection, the temperature in the grave will increase substantially, firstly closest to the injection point. By sequential injections, starting in the centre of the coffin, and outwards towards the ends of the coffin, the temperature development from one injection will cause a temperature increase in the neighboring bore holes to result in a higher starting temperature for the following injections, an effect that will increase the efficiency of the treatment without the necessity of injecting hot water.

Normally, the total amount of quicklime and water to be injected in a grave are distributed about evenly between the injections. The total amount to be injected is calculated from the humidity of the grave before the treatment is started.

As soon as the first injection is finalized the injection probe is pulled out of the hole and substituted with a modified plug 4', provided with a temperature probe 7 that is introduced into the grave and is connected to a measuring apparatus 6.

The injection in the remaining bore holes is then started, by removing one the plug 4 from one hole, inserting the injection probe, injecting the calculated part of the quicklime and water, pulling out the injection probe, and inserting the plug 4 again to seal the bore hole.

The temperature development in the grave is monitored for a time period after finishing the injection by means of the temperature probe 7 and measurement apparatus 6. A temperature increase in the grave from the start temperature that in Norway normally is about 4 °C, to a temperature of about 100 °C or higher, confirms that the process in the grave has started as expected. The temperature development in the grave may vary from grave to grave. In many cases a temperature increase from the starting temperature to 100 °C or more is seen in seconds or a few minutes. Registration of the temperature development over time has shown that due to the insulating properties of the soil, the temperature will remain high for several hours.

The plugs are allowed to stay in the bore holes for a period to keep the advantageous high pressure in the grave and to allow the pressure in the grave to be sufficiently reduced to avoid a "blowout". The plugs may be removed as soon as the temperature and thus the pressure has declined sufficiently. The skilled man will be able to decide the time needed without any undue experimentation. The time before the plugs are removed may vary from some hours to a few days. After the treatment and the removal of the plugs, the holes are kept open to give air, rain water and bacteria access to the grave for the final decomposition. Normally, the contents of the grave and the surrounding soil are allowed to stabilize and be further decomposed for some weeks or months after the treatment.

In the present description the term "quicklime" is used for CaO. CaO is also known as "burnt lime", unslaked lime" etc. CaO is known to react with water according to the following formula:

$$H_2O + CaO \rightarrow Ca(OH)_2$$

The reaction is exothermal and the temperature increase in the grave during the present treatment is a result of this exothermal reaction. The resulting $Ca(OH)_2$ is water soluble and the aqueous solution of $Ca(OH)_2$ has a high pH.

The quicklime is injected as a dry powder mixed with air as a blowing agent. Additionally, the air comprises oxygen that is promoting post treatment biological decomposition in the grave. The quicklime to be injected may be pulvirized quicklime, or granular quicklime. Finely granulated quicklime results in a rapid temperature increase after injection but may result in dust nuisance for the personnel performing the treatment. The choice of granular size has an influence on the reactivity of the quicklime and thus the temperature development in the grave, and has an influence on the flow properties of the quicklime in the injection equipment. Tests have shown that a too coarse quicklime may cause clogging of the presently used injection means. The preferred granular size may therefore be dependent on the choice of injection means as different injection means may be differently influenced by granular size. The quicklime using the presently used equipment, preferably has a particle size from 0 to 4 mm, more preferably from 0 to 2 mm.

Calculations has shown that an amount of 25 to 150 kg, such as from 50 to 100 kg, or about 60 to 80 kg quicklime has to be injected to obtain a sufficient temperature and treatment in a grave for an adult. The quicklime is preferably distributed mainly equally between the bore holes.

The quicklime is injected with air as propellant. The air pressure for injection may vary with the equipment used. The pressure is not important as ling as the blowing air contributes in drawing the quicklime through the injector and into the grave and to result in a satisfactory distribution of the quicklime in the grave. A air pressure between 1.5 kg/cm$^2$ to about 10 kg/cm$^2$ is preferred, such as e.g. about 2.5 kg/cm$^2$, to give a dispersed "spray" of quicklime that readily reacts with the water.

As mentioned above, water is injected into the grave after, before or simultaneously with the quicklime. When the water and quicklime is injected separately, it is preferred to inject water after injection of quicklime as this result in a better mixing of the components than the other way around. It is, however, preferred to inject water and quicklime simultaneously, to ensure the maximal mixing of water and quicklime both with each other and with the organic material in the grave.

The water is also injected under pressure. The water pressure may vary from the pressure of the water from the municipal water supply, to high pressure water, such as from about 3 kg/cm$^2$ to about 500 kg/cm$^3$. Pressurized water, such as e.g. from about 100 to about 300 kg/cm$^2$ will, have some cutting effect on the organic material in the grave, and will make the organic material readily available for the quicklime. The use of high pressure water thus improves the decomposition and the composting of the organic material. Low pressure water, e.g. at the pressure from the municipal water supply, will only cause mere mixing of water and quicklime.

The heat development from the reaction between quicklime and water, the alkaline environment and the availability of air from the injection in addition to availability of air and bacteria through the bore holes after the treatment will in most cases be sufficient to assure that the organic material is being sufficiently decomposed.

The amount of water that is necessary to convert the quicklime to calcium hydroxide ($Ca(OH)_2$), may be calculated from the reaction formula above. About 32 liters of water per 100 kg quicklime is required for a complete conversion. Less water makes the reaction incomplete, resulting in a lower heat development and lower degree of decomposition than intended. If to much water is added or the sum of the water already present in the grave, and the injected water is to high, the additional water will need some of the energy to be heated, resulting in a lower temperature in the grave and may be detrimental to the process. The use of hot water for injection may reduce this problem.

It is, however, preferred that an excess of water, in relation to the stoichiometric amount needed according to the reaction formula, is present, or added. Water reacts with the $Ca(OH)_2$ to give an aqueous alkaline solution (high pH). The aqueous alkaline participates in the further decomposition of the organic material.

It is, however, important that the temperature in the grave exceeds the melting point for adipocere (about 79 °C) for the time that is required for it to melt and to be degraded. The time where the temperature has to be above the melting temperature for the adipocere is dependent on the amount of adipocerous material in the grave and how fragmented, and thus available for a reaction with the water, quicklime and alkaline solution, the adipocerous material is. To assure the required decomposition of the adipocerous material, a temperature in the grave higher than 85 °C is required. More preferred the temperature must be higher than 95 °C, e.g. over 110 °C in the parts of the grave where the adipocerous material is present. A measured temperature of 100 °C may be a convenient indication on a successful start of the process and that the process will proceed until the organic material is fully decomposed. Temperatures between 100 and 200 °C, and occasionally above 300 °C, have been observed during the treatment of graves. During this process the plugs seals the grave so that a high pressure obtained in the grave. This combination of high pressure and high temperature accelerates the process and ensures that the adopocere melts to allow the degradation process to be completed.

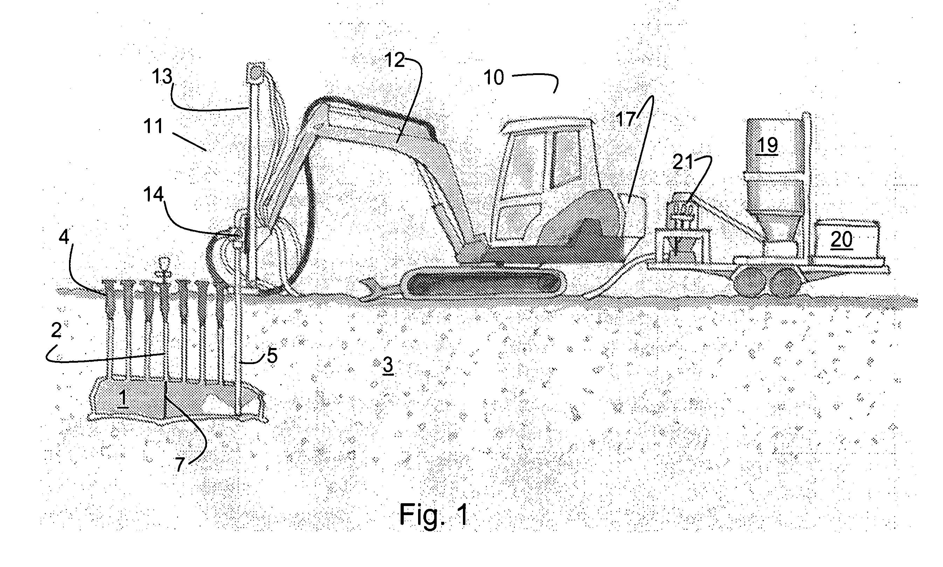

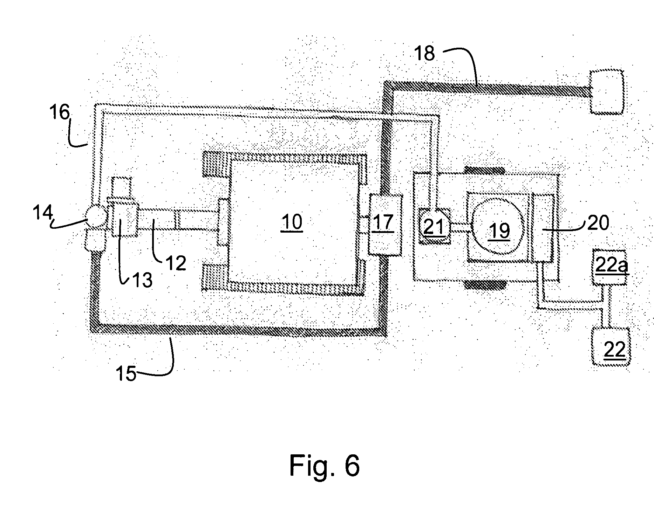

Figure 1 illustrates exemplary equipment that may be used for the present environmental stabilization of a grave. Figure 6 is a bird's eye view of the same equipment. The equipment is arranged on a suitable vessel 10, here a mechanical digger having an injection and drilling rig 11 arranged on the digging arm 12. In the illustrated embodiment a combined drill pipe and injection probe 5 is illustrated. The combined drill pipe and injection probe 5 is connected to a combined drilling drive and injector means 14. The combined drilling drive and injector means is connected to and supported by a drill rig 13.

The drilling motor and injector means 14 in the illustrated embodiment, may be used both to rotate the combined drill pipe and injection probe 5 during drilling to make the bore hole, and during injection to ensure a substantially homogenous injection of water and quicklime. In addition to rotation, the injection probe is lifted and lowered between the top and bottom of the coffin to ensure a substantially homogenous injection.

Water is led to the injector 14 via a pressurized water line 15, and quicklime is introduced through a quicklime line 16. A water aggregate 17, connected to a water line 18, is provided to give the required water pressure and temperature for injection. The water line may be substituted by a tank. The water aggregate 17 comprises pump to give the required pressure, and an optional water heater to heat the water.

Quicklime is introduced into the quicklime line 16 together with air. Quicklime from a quicklime container 19 is mixed with air from a compressor 20 in a feeder 21. The quicklime container may be e.g a tank or a big bag. The compressor 20 and /or the quicklime feeder 21 may be operated of the vessel 10, e.g. via a power take-off at the vessel, or be operated by electrical power from an external power supply 22, 22a.

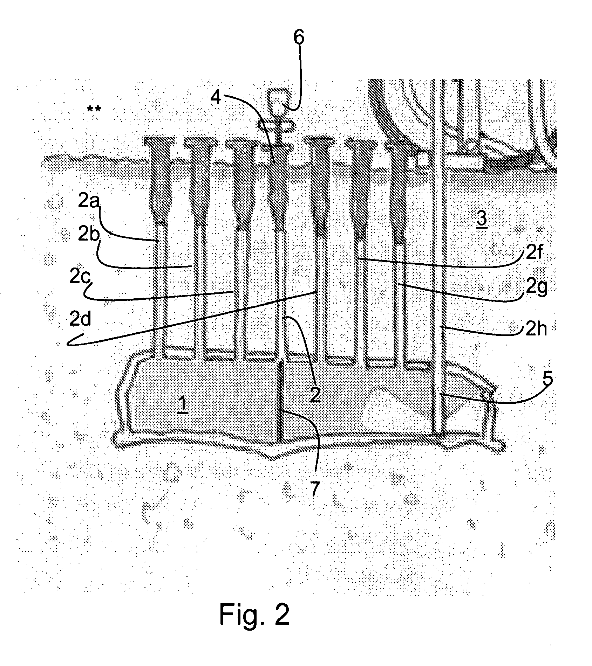

Figure 2 illustrates the bored bore holes for injection, 2, 2a, 2b, sc, 2d, 3e, 2f, 2g og 2h, where the bore hole 2 is the bore hole that is drilled first mainly in the centre or abdomen are of the coffin. The first bore hole 2 is closed by means of a modified plug 4 including a temperature probe 7 that is inserted into the grave after injection of quicklime and water into the bore hole in question. A measure instrument 6 is connected to the temperature probe to register the temperature development in the grave. The injection probe 5 is in figure 2 inserted into the bore hole 2h for injection of quicklime.

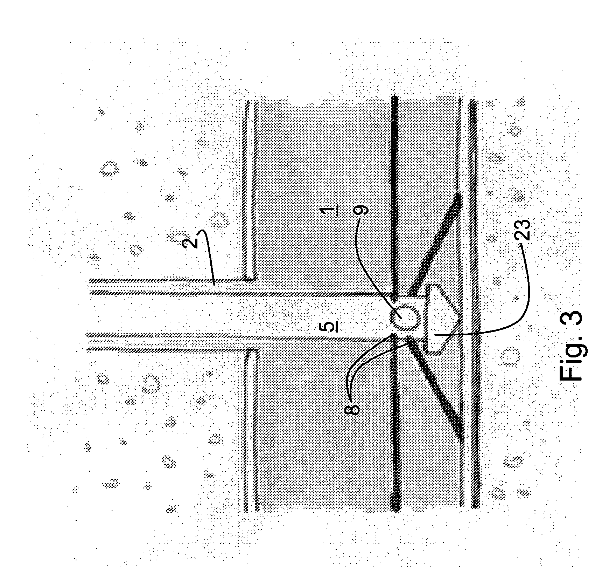

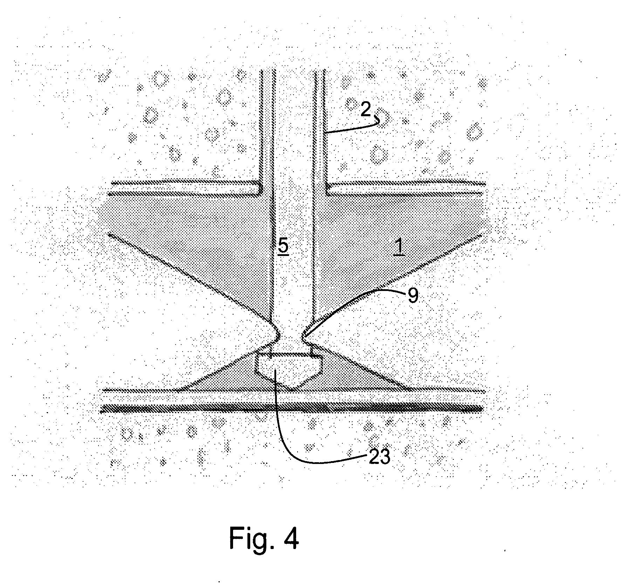

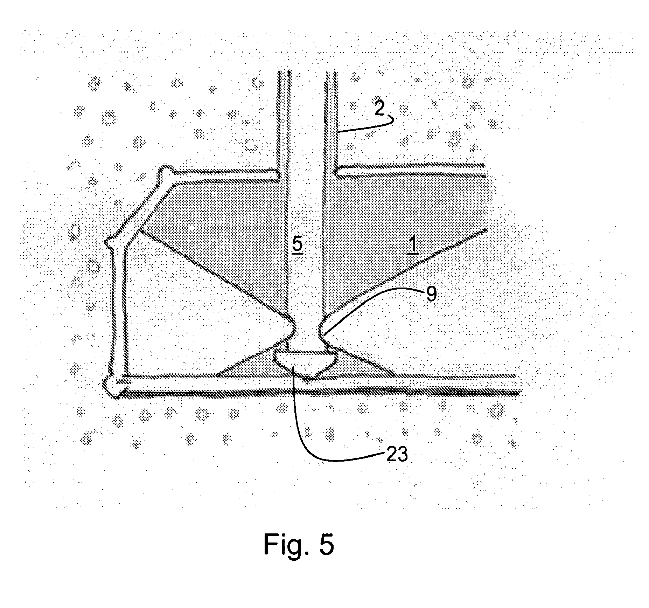

Figure 3 is a section through a grave during injection of water into a grave. Pressurixed water is sprayed through one or more water nozzles 8. If more than nozzles are used, the nozzles are preferably differently angled relative to the length axis of the injector. Quicklime and air is sprayed through quicklime nozzles 9, as illustrated at figures 4 and 5, illustrating injection in the centre of a coffin and at the end of a coffin, respectively. A drill bit 23 at the lower end of a combined drill pipe and injector, is illustrated at figures 3, 4 and 5.

**Examples**

Calculations have been performed to estimate the temperature development in a grave based on the injected amount of quicklime and water.

*Temperature estimates*

The development of the temperature by addition of water and quicklime may be estimated by disregarding the heat loss to the surroundings, by means of the following equation

$$Q = c * m * (t2 - t1)$$

Q = heat (kJ); c = specific heat capacity (kj\kg °C); m = mass to be heated (kg); (t2 - t1) is the temperature difference between the starting temperature (t1) and the end temperature (t2), being the temperature after the exothermal reaction between quicklime and water. The specific heat capacity of water, $c_{water}$ = 4,18 kJ\kg °C. The heat produced by the reaction of quicklime to form calcium hydroxide, Q = 1164 kJ/kg CaO.

At a mixing ration between quicklime and water of 2.5 and a start temperature t1=10 °C, adding 2.5 kg water at t1= 10 °C to 1 kg quicklime will cause the temperature (t2) to rise to 121 °C. In practical use, the purity of the quicklime and the heat loss to the surroundings has to be taken into consideration. Due to slow heat conduction in soil, the high temperature obtained in the grave after injection, will remain in the injected volume for several hours. When the quicklime and water are injected sequential by several injections in a plurality of bore holes, the temperature rise caused by one injection may increase the start temperature for the injection in the next bore hole.

The water content in the soil around the coffin, and consequently within the coffin, will vary i.a. by type of soil and drainage. At graveyards where the soil is, or comprises a large ratio of blue clay, it is not unusual that the soil and coffin is saturated with water for long periods during the year. In such cases the amount of water to be injected, may be reduced. In well drained soil the water content may be very low, and the amount of injected water has to be closer to the stoichiometrically calculated volume. Accordingly, to get an optimal temperature development, the humidity in the coffin has to be controlled before the injection starts.

Table 1 illustrates the volume of a new coffin and coffins that are fallen in after 20 years preservation period. The data in table 1 is based on observations from openings of graves dated from 1950 to 1970 at the graveyard Nordre Gravlund, Oslo. The tendency for coffins to fall in or collapse, and if the wooden material of the coffin is bacterially degraded, is highly dependent on the choice of wooden material for the coffin.

Table 1. Volume of a new coffin and a coffin fallen in after being buried for at least 20 years

|  | Length(cm) | Width (cm) | Height (cm) | Volume (liters) |
|---|---|---|---|---|
| New coffin | 200 | 50 | 40 | 400 |
| Coffin 1, fallen in | 200 | 50 | 20 | 200 |
| Coffin 2, fallen in | 200 | 50 | 15 | 150 |

*Temperature in water / soil after injection of quicklime*

The end temperature t2 (°C) in the water contained in a coffin after addition of water and quicklime is given in the table below. The start temperature is the temperature of the water before injection. The calculations are based on the use of water at the indicated temperatures for injection.

A coffin that has fallen in, having a volume of about 150 to 200 liters, will after addition of 80 kg quicklime and a sufficient amount of water to give at least a stoichiometric amount of water, result in the following end temperatures.

Table 2. End temperatures in coffin/ soil after addition of 80 kg CaO and sufficient water into a coffin volume of 150 and 200 liters, respectively

| Start temperature t1 (°C) | End temperature t2 (°C) 1501 | End temperature t2 (°C) 2001 |
|---|---|---|
| 0 | 149 | 111 |
| 5 | 154 | 116 |
| 10 | 159 | 121 |
| 15 | 164 | 126 |
| 20 | 169 | 131 |
| 25 | 174 | 136 |

(continued)

| Start temperature t1 (°C) | End temperature t2 (°C) 1501 | End temperature t2 (°C) 2001 |
|---|---|---|
| 30 | 179 | 141 |
| 35 | 184 | 146 |
| 40 | 189 | 151 |
| 50 | 194 | 156 |

The calculations are made under the assumption of a uniform heat development in the chest. Additionally, heat loss is nor included in the calculation as the thermal conductivity of soil is low resulting in a time lag before the heat is transferred to the surroundings and the grave is cooled.

According to the calculation it is assumed that there is no need to add more than about 100 kg quicklime to a grave to achieve the required degradation. When the start temperature (t1) is 10 °C, a sufficient degradation is obtained by using 70 to 80 kg quicklime under normal circumstances.

The total volume of water to be injected to obtain the required process is calculated from the water content in the coffin before the treatment is started. In a dry grave 160 liters of water and 80 kg quicklime may be injected, whereas 30 - 35 liters of water may be required in a grave having a humidity of about 80% to the same amount of quicklime.

Practical tests on actual graves have confirmed the efficiency of the treatment. By injection of water at the same time as the quicklime an immediate increase of temperature occurs, resulting in an increase in pressure in the grave. To avoid a blow out of the content of the grave, it is important that the plugs 4 form a substantially air tight connection with the soil and that they are kept in the bore holes until the temperature and pressure decreases. The combination of high pressure and temperature makes it possible to obtain a temperature of more than 100 °C with liquid water present in the grave, a temperature that accelerates the process of degradation.

**Claims**

1. A method for environmental stabilization of graves where the natural degradation have not occurred, the method comprising the following steps:

    • drilling a plurality of bore holes into the grave,
    • injection of CaO into the grave through a plurality of bore holes, and
    • allowing the reaction between CaO and water to develop heat,

    wherein CaO mixed with air and pressurized water, are injected simultaneously.

2. The method according to claim 1, the method further comprising the step of measuring the humidity in the grave before injection and adjust the amount of injected water and/or CaO based on the humidity measurements.

3. The method according to claim 1 or 2, wherein water is injected at a pressure between 3 $kg/cm^2$ and 500 $kg/cm^2$.

4. The method according to claim 3, wherein water is injected at a pressure between 100 $kg/cm^2$ and 300 $kg/cm^2$.

5. The method according to any of the preceding claims, wherein the water is heated before injection.

6. The method according to claim 5, wherein the water is heated to a temperature between 50 and 100 °C before injection into the grave.

7. The method according to claim 5 or 6, wherein the water is heated to a temperature between 65 and 90 °C before injection.

8. Method according to claim 5, 6 or 7, wherein the water is heated to a temperature between 75 and 85 °C before injection.

9. The method according to any of the preceding claims, wherein the temperature development in the grave is registered after injection to confirm heat development.

10. The method according to any of the preceding claims, wherein the grave is allowed to stabilize for a period of some days to some months after the injection before the grave is opened.

**Patentansprüche**

1. Verfahren zur Umgebungsstabilisierung von Gräbern, bei welchen der natürliche Abbau nicht eingetreten ist, wobei das Verfahren die folgenden Schritte umfasst:

   • Bohren einer Vielzahl von Bohrlöchern in das Grab,
   • Einspritzen von CaO in das Grab durch eine Vielzahl an Bohrlöchern, und
   • Ermöglichen, dass die Reaktion zwischen CaO und Wasser Wärme entwickelt,

   wobei mit Luft vermischtes CaO und unter Druck stehendes Wasser gleichzeitig eingespritzt werden.

2. Verfahren nach Anspruch 1, wobei das Verfahren weiterhin den Schritt des Messens der Feuchtigkeit im Grab vor dem Einspritzen und das Einstellen der Menge des eingespritzten Wassers und/oder CaO auf Grundlage der Feuchtigkeitsmessungen umfasst.

3. Verfahren nach Anspruch 1 oder 2, wobei Wasser bei einem Druck zwischen 3 kg/cm$^2$ und 500 kg/cm$^2$ eingespritzt wird.

4. Verfahren nach Anspruch 3, wobei Wasser bei einem Druck zwischen 100 kg/cm$^2$ und 300 kg/cm$^2$ eingespritzt wird.

5. Verfahren nach einem der vorhergehenden Ansprüche, wobei das Wasser vor dem Einspritzen erwärmt wird.

6. Verfahren nach Anspruch 5, wobei das Wasser vor dem Einspritzen in das Grab auf eine Temperatur zwischen 50 und 100 °C erwärmt wird.

7. Verfahren nach Anspruch 5 oder 6, wobei das Wasser vor dem Einspritzen auf eine Temperatur zwischen 65 und 90 °C erwärmt wird.

8. Verfahren nach Anspruch 5, 6 oder 7, wobei das Wasser vor dem Einspritzen auf eine Temperatur zwischen 75 und 85 °C erwärmt wird.

9. Verfahren nach einem der vorhergehenden Ansprüche, wobei die Temperaturentwicklung im Grab nach dem Einspritzen registriert wird, um eine Wärmeentwicklung zu bestätigen.

10. Verfahren nach einem der vorhergehenden Ansprüche, wobei es dem Grab ermöglicht wird, sich nach dem Einspritzen für einen Zeitraum von einigen Tagen bis einigen Monaten zu stabilisieren bevor das Grab geöffnet wird.

**Revendications**

1. Procédé pour la stabilisation environnementale des tombes dans lesquelles la dégradation naturelle n'a pas eu lieu, le procédé comprenant les étapes suivantes consistant à :

   percer une pluralité de trous de sondage dans la tombe,
   injecter du CaO dans la tombe par une pluralité de trous de sondage, et
   permettre la réaction entre le CaO et l'eau pour développer de la chaleur,

   dans lequel le CaO mélangé avec l'air et l'eau sous pression sont injectés simultanément.

2. Procédé selon la revendication 1, le procédé comprenant en outre les étapes consistant à mesurer l'humidité dans la tombe avant l'injection et à ajuster la quantité d'eau injectée et/ou de CaO en fonction des mesures d'humidité.

3. Procédé selon la revendication 1 ou 2, dans lequel l'eau est injectée à une pression comprise entre 3 kg/cm$^2$ et 500 kg/cm$^2$.

**4.** Procédé selon la revendication 3, dans lequel l'eau est injectée à une pression comprise entre 100 kg/cm$^2$ et 300 kg/cm$^2$.

**5.** Procédé selon l'une quelconque des revendications précédentes, dans lequel l'eau est chauffée avant l'injection.

**6.** Procédé selon la revendication 5, dans lequel l'eau est chauffée à une température comprise entre 50 et 100°C avant l'injection dans la tombe.

**7.** Procédé selon la revendication 5 ou 6, dans lequel l'eau est chauffée à une température comprise entre 65 et 90°C avant l'injection.

**8.** Procédé selon la revendication 5, 6 ou 7, dans lequel l'eau est chauffée à une température comprise entre 75 et 85°C avant l'injection.

**9.** Procédé selon l'une quelconque des revendications précédentes, dans lequel le développement de température dans la tombe est enregistré après l'injection pour confirmer le développement de chaleur.

**10.** Procédé selon l'une quelconque des revendications précédentes, dans lequel la tombe peut être stabilisée pendant une période de quelques jours à quelques mois après l'injection avant que la tombe ne soit ouverte.

Fig. 1

Fig. 2

Fig. 3

Fig. 4

Fig. 5

Fig. 6

EP 2 027 944 B1

Fig. 7

**EP 2 027 944 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10355067 A1
- EP 1457188 A